# EUROPÄISCHE PATENTSCHRIFT

(11) **EP 1 003 626 B1**
(45) Veröffentlichungstag und Bekanntmachung des Hinweises auf die Patenterteilung: **01.10.2003**
(21) Anmeldenummer: 98942639.0
(22) Anmeldetag: 27.07.1998
(51) Int. Cl.: B24B 19/16, B24B 9/04, H01M 4/75

(54) **VERFAHREN UND VORRICHTUNG ZUR HERSTELLUNG VON STIFTEN, WIE BATTERIESTIFTEN**
METHOD AND DEVICE FOR PRODUCING PINS, SUCH AS BATTERY TERMINALS
PROCEDE ET DISPOSITIF POUR LA FABRICATION DE BROCHES, NOTAMMENT DE BROCHES DE PILE

(30) Priorität: 14.08.1997 DE 19735299
(43) Veröffentlichungstag der Anmeldung: 31.05.2000
(73) Patentinhaber: William Prym GmbH & Co. KG, 52224 Stolberg (DE)
(72) Erfinder: GEHRING, Manfred, D-75217 Birkenfeld (DE); DÜPPENGIESSER, Uwe, D-52222 Stolberg (DE)
(74) Vertreter: Mentzel, Norbert, Dipl.-Phys.
(86) Internationale Anmeldenummer: EP9804698
(87) Internationale Veröffentlichungsnummer: WO99008836

(56) Entgegenhaltungen:
- EP-A- 0 642 887
- DE-C- 580 938
- FR-A- 2 297 052
- PATENT ABSTRACTS OF JAPAN vol. 017, no. 106 (M-1375), 4. März 1993 & JP 04 296510 A (NGK INSULATORS LTD), 20. Oktober 1992

## Beschreibung

Die Erfindung richtet sich zunächst auf ein Verfahren zur Herstellung von Stiften, z.B. von Batteriestiften, wie sie in elektrischen Batterien als Anoden-Ableiter verwendet werden, gemäß dem Oberbegriff von Anspruch 1 sowie auf eine Vorrichtung zur Durchrührung des Verfahrens nach Patentanspruch 3.

Bei bekannten Verfahren geht man von einem Draht aus, der zunächst in Abschnitte geschnitten, dann mit einem Kopf versehen wird und frei hängend in einer Transportschiene an einer Schleifwalze entlang geführt wird, wobei an dem unteren Stiftende eine Spitze erzeugt wird. Der so gebildete Stift-Rohling wird dann in der Transportschiene zu einem Behälter geführt, wo man dann die so bearbeiteten Rohlinge zur Weiterverarbeitung sammelt.

Bei dem bekannten Verfahren entstehen durch den Schleifvorgang Grate am Stiftende, die eine Nachbearbeitung des Rohlings erfordern. Bei bestimmungsgemäßem Gebrauch in einer Batterie lassen die Grate an der Stiftspitze in der Anoden-Substanz Gasbläschen entstehen, was zu Störungen fuhrt. Solche Grate verschmutzen auch die Anlagen zur Verarbeitung der Stifte und bereiten Schwierigkeiten bei deren automatischen Zurührung.

Um die Grate an der Stiftspitze zu beseitigen, hat man beim bekannten Verfahren die Stift-Rohlinge einer weiteren, besonderen Behandlung unterzogen. Man hat die Stift-Rohlinge in Gleitschleifeinrichtungen verfüllt, wo sie zusammen mit Chemikalien und Schleifmitteln bearbeitet wurden. Dazu sind zeitaufwendige weitere Arbeitsgänge und platzaufwendige Maschinen erforderlich, welche die Herstellung von Batteriestiften verteuern. Außerdem kam es bei dieser Nachbehandlung in Gleitschleifeinrichtungen durch die Schleifmittel auch zu einer unerwünschten Nachbehandlung und zu einem Abrieb in den übrigen Oberflächenbereichen des Stiftes.

Bei einem Verfahren zur Glättung eines geglühten Röhrchens, welches als ein Festkörper-Elektrolyd in Natrium-Schwefelzellen verwendet wird (PATENT ABSTRACTS OF JAPAN, vol. 017, no. 106 M-1375) werden jeweils die gleichen Oberflächenbereiche durch zwei Kombinationswalzen einerseits am Ende und andererseits am Schaft, eines Röhrchens einzelweise behandelt. Die Kombinationswalzen umfassen gleichzeitig sowohl Schleifmittel als auch mitrotierende Bürstenmittel. Die Rotationsachse der kombinierten Walzen verlaufen parallel zur Längsachse des Röhrchens. In beiden Bearbeitungsstufen sind die Achsensymmetrie und die Angriffswinkel der Schleif- und Bürstenmittel identisch. Die stückweise Behandlung der Röhrchen an der kombinierten Walze ist umständlich und zeitaufwendig. Die Röhrchen besitzen keinen Kopf, weshalb Transportschienen nicht verwendbar sind. Ebenso werden am gegenüberliegenden Röhrchenende keine Spitzen angeschliffen, weshalb ein Entgraten von Spitzen keine Rolle spielt.

Bei einem anderen Verfahren zum Spitzen von stabförmigen Gegenständen (DE 41 07 871 A1) verwendet man eine Aufnahmevorrichtung für diese stabförmigen Gegenstände, deren Austrittsöffnung unter einem spitzen Winkel zu einer Stirnfläche einer Schleifscheibe angeordnet ist. Eine Beseitigung von Graten ist nicht vorgesehen. Der Umfangsbereich der Schleifscheibe bleibt bei der Behandlung der stabförmigen Gegenstände ungenutzt.

Zum Auspolieren von Nadelöhren (DE 36 324) werden die Nadeln zwischen einer langsam rotierenden Scheibe und einem ausgehöhlten Tisch hindurchgeführt. Eine rasch rotierende ausgehöhlte Stahldrahtbürste rundet dabei die Öhre aus bzw. poliert sie. Die Herstellung der Nadelspitzen erfolgt davon unabhängig, in einer gesonderten Vorrichtung. Eine Behandlung der Nadelspitzen auf dieser Vorrichtung findet nicht statt.

Der Erfindung liegt zunächst die Aufgabe zugrunde, ein zuverlässiges Verfahren zum Herstellen von Batteriestiften der im Oberbegriff des Anspruches 1 angegebenen Art zu entwickeln, das schneller und kostensparender Batteriestifte herzustellen gestattet. Dies wird erfindungsgemäß durch die im Kennzeichen des Anspruches 1 angeführten Maßnahmen erreicht, denen folgende besondere Bedeutung zukommt.

Bei der Erfindung befinden sich eine Vielzahl von rotierenden Stiften gleichzeitig in unterschiedlichen Bearbeitungsstadien, die in zwei aufeinanderfolgenden getrennten Abschnitten der Transportschiene erfolgen. In dem ersten Schienen-Abschnitt ist die Schleifwalze zum Zuspitzen der Stift-Rohlinge angeordnet, während im zweiten Schienen-Abschnitt eine weitere eigenständige Walze zum Entgraten der Stiftspitzen verwendet wird. Innerhalb dieser Schienen-Abschnitte befinden sich die Stifte, in Abhängigkeit von ihrer Lage ihrerseits in individuellen Bearbeitungsstadien; am Abschnittsanfang liegen die Stifte noch als Rohlinge bzw. als Zwischenprodukt vor, die sich zum Abschnittsende hin zunehmend vervollkommnen. Am Schienenende fallen fertig bearbeitete Stift-Endprodukte an, die in dem gemeinsamen Behälter zur Weiterverarbeitung gesammelt werden können. Außerdem ist in beiden Schienenabschnitten der Eingriffswinkel der Walzen an den Stiftenden unterschiedlich. Dieser Winkel ist bei der entgratungswirksamen Walze, die an den im zweiten Schienen-Abschnitt einlaufenden Stift-Zwischenprodukten arbeitet, größer als der entsprechende Winkel der Schleifwalze gegenüber den Rohlingen im ersten Schienen-Abschnitt.

Bewährt hat es sich als weitere Walze in dem zweiten Schienen-Abschnitt auch eine Schleifscheibe zu verwenden. Es ist aber möglich, wie im Ausführungsbeispiel näher gezeigt ist, für die Nachbehandlung der Stift-Spitzen eine Bürstenwalze zu verwenden. Mit der Erfindung wird das bei Batteriestiften übliche gesonderte Entgratungs-Verfahren eingespart. Die verfügbare Führung der Stift-Rohlinge wird bei der Erfindung zugleich dazu genutzt um diese gruppenweise zu kompletten Batteriestiften zu konfektionieren. Weil das Schleifen der Stift-Spitzen einerseits und das Entgraten der fertigen Spitzen andererseits zwar gruppenweise getrennt aber gleichzeitig in benachbarten Schienenabschnitten an aufeinanderfolgenden Stiften erfolgen, wird ein erheblicher Zeitaufwand eingespart.

Die Erfindung richtet sich auf eine Vorrichtung zur Durchführung des im Anspruch 1 angegebenen Verfahrens. Bei der Erfindung kann eine zum Schleifen der Stiftspitzen dienende Vorrichtung die bereits mehrfach genannte neue Funktion übernehmen, ein Entgraten der fertigen Stift-Spitzen auszuführen. Die Verlängerung der Transportschiene stört nicht, wenn man die beiden Abschnitte zueinander höhenversetzt und die Stifte in diesen Abschnitten serpentinenartig zueinander gegensinnig führt. So lässt sich die Vorrichtung dimensionsmäßig raumsparend gestalten.

Weitere Maßnahmen und Vorteile der Erfindung ergeben sich aus den Unteransprüchen, der nachfolgenden Beschreibung und den Zeichnungen. Es zeigen:
- Fig. 1: perspektivisch und im Längsschnitt eine elektrische Batterie, die den bestimmungsgemäßen Gebrauch eines erfindungsgemäßen Batteriestiftes veranschaulicht,
- Fig. 2,: schematisch, in Draufsicht und im Ausbruch, eine Draufsicht auf die erfindungsgemäße Vorrichtung, an welcher sich die erfindungsgemäßen Verfahrensschritte abschnittweise vollziehen,
- Fig. 3: bis 5 schematische Seitenansichten durch die Vorrichtung von Fig. 2 längs der dortigen Schnittlinie III - III bzw. IV - IV bzw. V - V,
- Fig. 6,: in perspektivischer Darstellung und Vergrößerung, das Unterende des Rohlings nach dem Schleifvorgang und
- Fig. 7,: in einer zu Fig. 6 analogen perspektivischen, vergrößerten Darstellung, die Stiftspitze des fertig entgrateten Stift-Produkts.

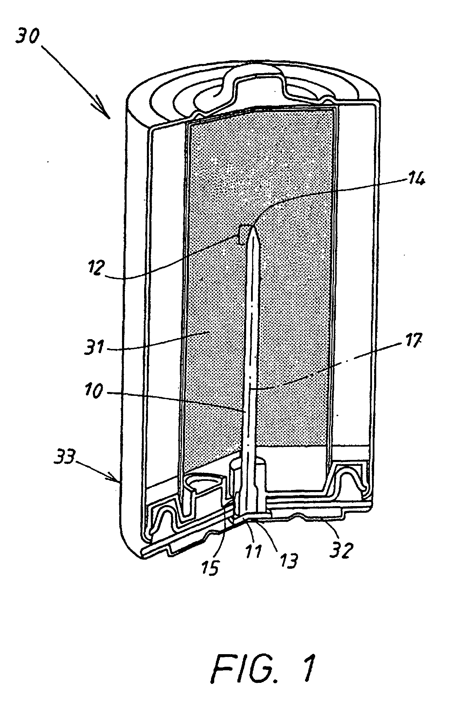

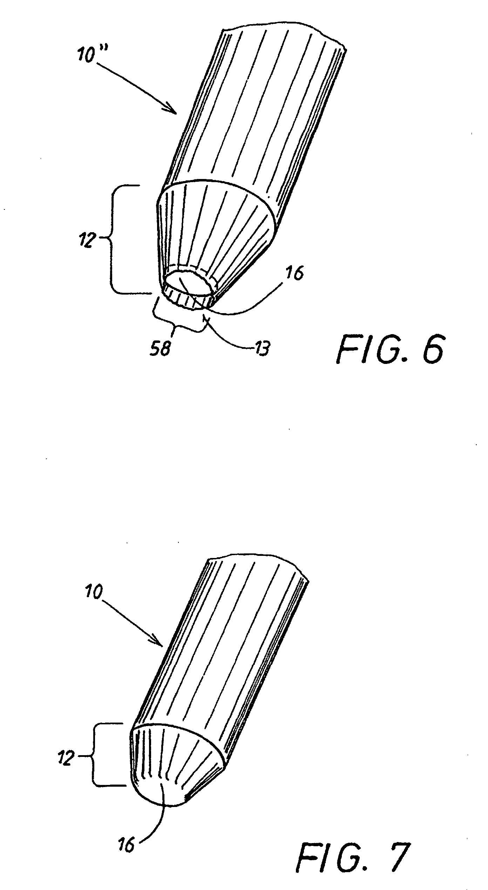

Der in Fig. 1 gezeigte Verwendungsfall zeigt das fertige Stift-Produkt 10 bei bestimmungsgemäßen Gebrauch als Batteriestift in einer elektrischen Batterie 30. Der Batteriestift 10 umfaßt einen verbreiterten Kopf 11 an seinem einen Stiftende 13 und eine mit einer am besten aus Fig. 7 erkennbaren Abflachung 16 versehenen Spitze 12 am gegenüberliegenden, anderen Stiftende 14. Der Batteriestift 10 kann in manchen Anwendungsfällen, von denen einer in Fig. 1 gezeigt ist, im Bereich seines Kopfes 11 auch eine Schaftverdickung 15 aufweisen, die aber in anderen Fällen auch fehlen kann.

Wie aus Fig. 1 hervorgeht, wird der Batteriestift 10 mit seiner strichpunktiert angedeuteten Stiftachse 17 in der Mitte der elektrischen Batterie 30 positioniert und taucht dabei in einen Elektrolyten 31. Der Stift 10 fungiert als Anoden-Ableiter, wobei an seinem Kopf 11 der negative Batteriepol entsteht. Der verbreitete Kopf 11 sorgt im Montagefall für einen guten elektrischen Kontakt mit einer Bodenplatte 32 des als ein Bestandteil des Batteriegehäuses dienenden Bechers 33.

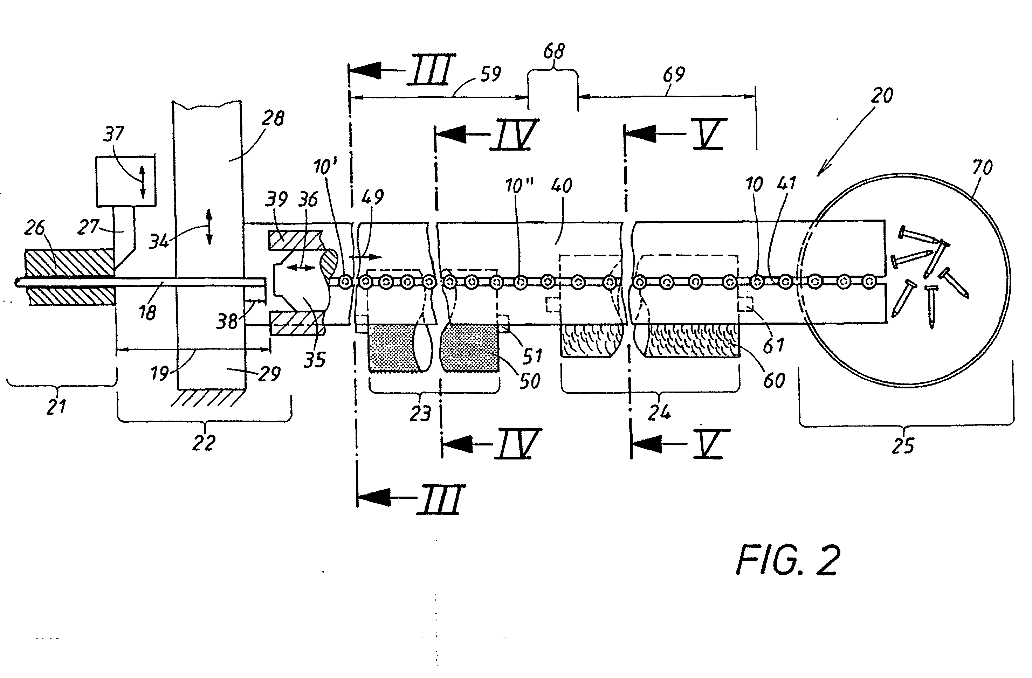

Fig. 2 zeigt, anhand der dabei benutzten Vorrichtung 20, das erfindungsgemäße Verfahren in aufeinanderfolgenden Verfahrensschritten. Die Verfahrensschritte sind in Fig. 2 mit 21 bis 25 gekennzeichnet, wo sich folgendes vollzieht.

In einer ersten Verfahrensstufe 21 wird ein fortlaufender Metalldraht 18 der Vorrichtung zugeführt und gelangt dabei durch eine Führung 26 zu einem Schneidwerkzeug 27, das im nachfolgenden Verfahrensschritt 22 Drahtabschnitte 19 definierter Länge herzustellen gestattet. Dort befinden sich zwei einen Drahtabschnitt 19 zwischen sich fassende Matrizen 28, 29, von denen mindestens eine Matrize 28 im Sinne des Doppelpfeils 34 beweglich ist. Die beiden Matrizen 28, 29 fassen den Draht 18 zwischen sich, wobei ein bestimmtes Drahtendstück 38 die Matrizen 28, 29 überragt. Die Matrizen 28, 29 halten den Draht 18 fest und, in Übereinstimmung damit, führt das Schneidwerkzeug 27 eine durch einen Doppelpfeil 37 in Fig. 2 veranschaulichte Schnittbewegung am Stirnende der Führung 26 aus. So entsteht ein abgetrennter Drahtabschnitt 19.

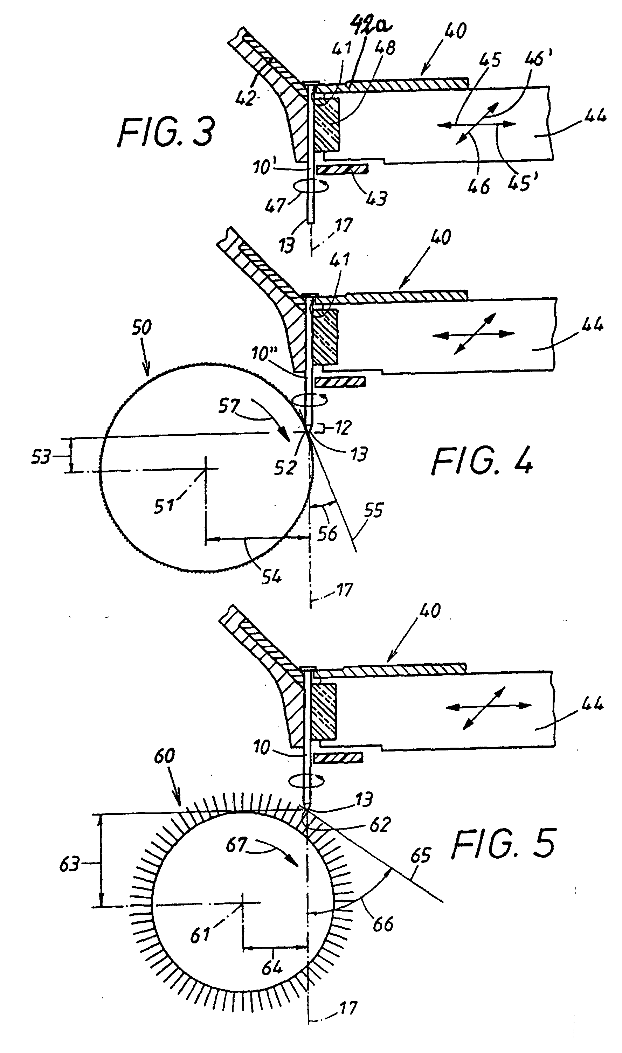

In der zweiten Verfahrensstufe 22 wird der vorerwähnte Stift-Kopf 11 erzeugt. Dazu dient ein in Fig. 2 vorgesehener, im Sinne des Doppelpfeils 36 axialbeweglicher Döpper 35. Der Döpper 35 arbeitet in einer Führung 39 und verformt das die Matrizen 28, 29 überragende Drahtendstück 38 zu dem aus Fig. 1 ersichtlichen Kopf 11. Dadurch entsteht ein Stiftrohling 10', dessen Aussehen in Fig. 3 zu erkennen ist.

In einer Ebene unterhalb der den zweiten Verfahrensschritt 22 vollziehenden Teile der Vorrichtung 20 befindet sich eine Transportschiene 40, die einen Schienen-Längsschlitz 41 aufweist. Die Stiftrohlinge 10' fallen in diesen Schlitz 41, wenn sich die beiden Matrizen 28, 29 öffnen. Sie bleiben dort mit ihrem Stift-Kopf 11 hängen und ragen mit ihren Schäften frei nach unten. Durch seitliche Führungen 42, 42a, 43 gemäß Fig. 3, die in unterschiedlichen Bereichen des Schaftes angreifen können, wird eine unerwünschte Pendelbewegung quer zum Längsschlitz-Verlauf verhindert. Der Transport 49 in der Schiene 40 könnte durch ein leichtes Gefälle unter Ausnutzung der Schwerkraft erfolgen, doch dient dazu vor allem ein Transferriegel 44, der eine in zwei Phasen zerlegbare Längs- und Querbewegung 46, 46'; 45, 45' ausführt. Diese Bewegungen dienen nicht nur zum schrittweisen Transport 49 der Stiftrohlinge 10', sondern auch zur Drehung der Stiftrohlinge 10' im Sinne des in Fig. 3 angedeuteten Drehpfeils 47. Diese Drehung 47 ist vor allem für die beiden weiteren Verfahrensschritte 23, 24 von Fig. 2 bedeutsam.

Der Transferriegel 44 ist als Längsleiste ausgebildet, die sich parallel zum Schienen-Längsschlitz 41 erstreckt und an ihrer den Stiftrohlingen 10' zugekehrten Seite einen elastischen Gummieinsatz 48 od. dgl. trägt. Der erste Bewegungsschritt ist, gemäß dem Pfeil 45, eine sich annähernde Querbewegung, wo der Gummieinsatz 48 gegen die Schäfte der Stifte 10' fährt, welche durch die gegenüberliegende, als Widerlager dienende Führung 42 nicht ausweichen können. Dann folgt die durch den Pfeil 46 in Fig. 3 veranschaulichte Längsbewegung des Riegels 44 in der gewünschten Transportrichtung der Schiene 40. Dadurch werden die erfaßten Stifte 10 mitgenommen und im Schienenlängsschlitz im Sinne des Pfeils 49 von Fig. 2 im Längsschlitz 41 transportiert. Bei dieser Transportbewegung 49 rollen sie sich an der als Gegenlager dienenden Führung 42 ab, wodurch die vorerwähnte Drehbewegung 47 der Stifte 10' zustande kommt. Nach einer bestimmten Transportstrecke in Längsrichtung 46 schließt sich die in Fig. 3 durch den Pfeil 45' verdeutlichte Quer-Gegenbewegung des Riegels 44 im Entfernungssinne an. Dadurch werden die Stifte 10^{'} freigegeben, worauf der Riegel 44 seine durch den Pfeil 46' von Fig. 3 gekennzeichnete Längs-Rückbewegung in Transport-Gegenrichtung ausführt. Diese Rückbewegung 46' endet, wenn die Ausgangsstellung des Transferriegels 44 erreicht ist, wo wieder die vorerwähnte im Annäherungssinne wirkende Querbewegung 45 beginnt. Die unterhalb des Riegels 44 vorgesehene andere Führung 43 ist eine Kunststoff- oder Metall-Leiste, die auch zur Abstützung des Stiftes bei der Bearbeitung in den Verfahrensschritten 23, 24 dient.

Diese Transportschiene 40 und die zugehörigen vorerwähnten Transportmittel sind auch in den nachfolgenden Abschnitten wirksam, wo sich eine beim dritten Verfahrensschritt 23 von Fig. 2 wirksame Schleifwalze 50 befindet. Die Schleifwalze 50 ist auf der dem Riegel 44 gegenüberliegenden Seite angeordnet und verläuft mit ihrer vorzugsweise einstellbaren Rotationsachse 51 etwa parallel zum SchienenLängsschlitz 41. Die Rotationsrichtung 57 der Schleifwalze 50 ist in Fig. 4 durch einen Pfeil veranschaulicht. Es kommt zu einem Abschliff am Stift-Unterende 13, wodurch dort die in Fig. 4 bereits angedeutete Stift-Spitze 12 entsteht. Man erhält ein Stift-Zwischenprodukt 10" mit dem aus Fig. 6 ersichtlichen Aussehen an der Stift-Spitze 12. Die zentrale Abflachung 16 am Stift-Unterende 13 wird von Graten 58 überragt, die aus den eingangs bereits erwähnten Gründen entfernt werden müssen. Das erfolgt im gleichen Arbeitsgang während des vierten Verfahrensschritts 24 von Fig. 2 auf der gleichen Vorrichtung 20.

Der vierte Arbeitsschritt 24 erfolgt in einem dem Schleifvorgang im Abschnitt 59 von Fig. 2 folgenden Schienenabschnitt 69. Diese beiden Abschnitte 59, 68 sind zweckmäßigerweise zueinander höhenversetzt angeordnet und werden von den Stiften 10' bzw. 10" gegensinnig durchlaufen. Im Schienenübergang 68 erfolgt eine Umlenkung in der Führung der Stifte, die in diesem Übergangsbereich 68 bereits als mit Spitzen 12 versehene Stift-Zwischenprodukte 10" transportiert werden. Im Abschnitt 69 befindet sich eine Bürstenwalze 60, deren Borsten vorzugsweise als Kunststoffschleifborsten ausgebildet sind. In diese Kunststoffschleifborsten sind Schleifpartikel, wie Siliciumcarbid, integriert. Die Bürstenwalze 60 sorgt dafür, daß die Grate 58 gemäß Fig. 6 an den Stift-Zwischenprodukten 10" entfernt werden und das aus Fig. 7 ersichtliche Stift-Endprodukt 10 entsteht. Wie Fig. 7 zeigt, sind die Grate 58 beim Endprodukt 10 beseitigt. Es liegt ein glatter, ggf. etwas abgerundeter Übergang zwischen dem Konus der Spitze und der zentralen Abflachung 16 im Batteriestift 10 vor.

In Fig. 4 und 5 sind die besonderen Positionen der Schleifwalze 50 einerseits und der Bürstenwalze 60 andererseits bezüglich der mit 52 bzw. 62 gekennzeichneten Bearbeitungsstellen an den Stift-Unterenden 13 der Zwischenprodukte 10" bzw. Endprodukte 10 erkennbar. Die Rotationsachse 51 der Schleifwalze 50 ist in einer kleineren vertikalen Entfernung 53 vom Stift-Unterende 13 entfernt angeordnet als die, ebenfalls vorzugsweise einstellbare Rotationsachse 61 der Bürstenwalze 60. Bei der Bürstenwalze liegt die aus Fig. 5 ersichtliche größere vertikale Entfernung 63 vor. Bei annähernd gleichem Durchmesser der Walzen 50, 60 stehen die jeweiligen horizontalen Abstände 54, 64 des Stiftunterendes 13 zur Walzenmitte in umgekehrtem Verhältnis zu den vertikalen Abständen 53, 63.

In Fig. 4 und 5 sind die an den jeweiligen Bearbeitungsstellen 52, 62 sich ergebenden Berührungstangenten 55, 65 an den jeweiligen Bearbeitungsstellen 52, 62 eingezeichnet. Sie bilden bezüglich der jeweiligen Stiftachse 17 unterschiedliche Berührungswinkel 56, 66. Der Berührungswinkel 66 bei der Bürstenwalze 60 ist größer als der Berührungswinkel 56 bei der Schleifwalze 50.

Wie aus dem Rotations-Pfeil 67 in Fig. 5 zu erkennen ist, dreht sich die Bürstenwalze in der gleichen Richtung wie die Schleifwalze 50. Es können daher dafür gleiche Antriebsmittel verwendet werden. Das gleiche gilt für den Antrieb der jeweiligen Transferriegel 44 in den unterschiedlichen Abschnitten der Transportschiene 40.

Wie aus Fig. 2 zu entnehmen ist, verlassen den vierten Verfahrensschritt 24 bereits fertige Stift-Endprodukte 10, die dann von der Transportschiene 40 zu einem Behälter 70 gebracht werden. Dort werden bereits die fertigen Stifte 10 gesammelt und stehen zur weiteren Bearbeitung oder Verarbeitung, z. B. in einer Batterie 30, zur Verfügung. In dieser fünften Arbeitsstufe 25 erfolgt also ein Sammeln, ggf. auch eine mengenmäßige Aufteilung der fertigen Stifte 10.

Wie bereits eingangs erwähnt wurde, kann anstelle der beschriebenen Bürstenwalze 60 auch eine weitere Schleifwalze zum Entgraten der Stiftspitzen verwendet werden. Die Anordnung sollte dann aber so sein, wie aus den Zeichnungen ersichtlich ist und vorausgehend beschrieben wurde. Diese Ausführung hat sich in der Praxis sehr bewährt.

### Bezugszeichenliste:

- 10: Stift-Endprodukt, Batterie-Stift
- 10': Stiftrohling
- 10": Stift-Zwischenprodukt
- 11: Kopf von 10
- 12: Spitze von 10
- 13: ein Stiftende, Unterende
- 14: anderes Stiftende, Oberende
- 15: Schaftverdickung
- 16: zentrale Abflachung bei 12
- 17: Stiftachse von 10
- 18: fortlaufender Draht
- 19: Drahtabschnitt
- 20: Vorrichtung für 10
- 21: erster Verfahrensschritt, Drahtzuführung
- 22: zweiter Verfahrensschritt, Ablängen von 18
- 23: dritter Verfahrensschritt, Schleifen von 12
- 24: vierter Verfahrensschritt, Entgraten von 12
- 25: fünfter Verfahrensschritt, Sammeln von 10
- 26: Drahtführung in 21
- 27: Schneidwerkzeug für 19
- 28: erste Matrize, beweglich
- 29: zweite Matrize, ggf. fest
- 30: elektrische Batterie
- 31: Elektrolyt
- 32: Bodenplatte von 33
- 33: Becher von 30
- 34: Bewegungs-Pfeil von 28
- 35: Döpper
- 36: Axialbewegungs-Pfeil von 35
- 37: Pfeil der Schnittbewegung von 27
- 38: überstehendes Drahtendstück
- 39: Führung für 35
- 40: Transportschiene
- 41: Schienen-Längsschlitz in 40
- 42: Führung, Gegenlager
- 42a: Führung
- 43: Führungsleiste
- 44: Transferriegel
- 45: Querbewegungsschritt von 44 im Annäherungssinne
- 45': Querbewegungsschritt von 44 im Entfernungssinne
- 46: Längsbewegung von 44 in Transportrichtung von 10
- 46': Längs-Rückbewegung von 44 in Transport-Gegenrichtung von 10
- 47: Drehpfeil von 10, 10' bzw. 10"
- 48: Gummieinsatz in 44
- 49: Transport-Pfeil von 10'
- 50: Schleifwalze
- 51: Rotationsachse von 50
- 52: Bearbeitungsstelle von 50 an 10'
- 53: vertikale Entfernung von 51 von 52
- 54: horizontaler Abstand von 51 von 52
- 55: Berührungstangente von 10' an 50
- 56: Berührungswinkel zwischen 55 und 17
- 57: Rotationspfeil von 40
- 58: Grat an 12 bei 10'
- 59: Schienenabschnitt von 40 bei 23
- 60: Bürstenwalze
- 61: Rotationsachse von 60
- 62: Bearbeitungsstelle zwischen 10 und 60
- 63: vertikale Entfernung von 61 gegenüber 13
- 64: horizontaler Abstand zwischen 13 und 61
- 65: Berührungstangente von 13 an 60
- 66: Berührungswinkel zwischen 65, 17
- 67: Rotations-Pfeil von 60
- 68: Schienenübergang zwischen 59, 60
- 69: Schienenabschnitt von 40 bei 24
- 70: Behälter

## Patentansprüche

1. Verfahren zum Herstellen von Stiften, wie Batteriestiften (10), die als Anoden-Ableiter in elektrischen Batterien (30) verwendet werden,
indem zunächst ein Draht (18) fortlaufend einem Schnittwerkzeug (27) zugeführt und dort in Drahtabschnitte (19) definierter Länge geschnitten wird,
danach die Drahtabschnitte (19) nacheinander einem Stauchwerkzeug (35) zugeführt werden, wo jeweils das eine Abschnittsende (38) mit einem Stiftkopf (11) versehen wird und dadurch ein Stift-Rohling (10') entsteht,
dann diese Stift-Rohlinge (10') in eine Transportschiene (40) gelangen, wo sie sich mit ihren Stift-Köpfen (11) in einem Schienen-Längsschlitz (41) abstützen und frei hängend weitergeführt (49) werden,
danach werden die in der Transportschiene (40) geführten Stift-Rohlinge (10') mit ihrem dem Stift-Kopf (11) abgekehrten Unterende (13) an einer Schleifwalze (50) entlang geführt und dabei um ihre Stiftachse (17) gedreht (47).
wodurch eine Stift-Spitze (12) mit noch zu entfernende Graten (58) am Stift-Rohling (10') entsteht,
und schließlich werden die zugespitzten Stifte in der Transportschiene (40) zu einem Behälter (70) gebracht, wo sie aus dem Schienen-Längsschlitz (41) fallen und zur Weiterverarbeitung gesammelt werden,
**dadurch gekennzeichnet,**
**dass** eine Vielzahl von frei hängenden Stiften (10', 10", 10) in mindestens zwei aufeinanderfolgenden Abschnitten (59, 69) der Transportschiene (40) geführt und dort gruppenweise gleichzeitig bearbeitet werden,
indem im ersten Schienen-Abschnitt (59) die Stift-Rohlinge (10') an der Schleifwalze (50) entlanglaufen und als mit der Stift-Spitze (12) versehene Zwischen-Produkte (10") in den zweiten Schienen-Abschnitt (69) übergehen,
**dass** die Stift-Zwischenprodukte (10") im zweiten Schienenabschnitt (69) entlang einer weiteren Walze (60) bewegt und dort die an den Stift-Spitzen (12) befindlichen Grate (58) entfernt werden,
wobei der Berührungswinkel (66) der entgratungswirksamen Walze (60) bezüglich der Stift-Spitze (12) des Zwischenprodukts (10") im Vergleich mit dem entsprechenden Berührungswinkel (56) der Schleifwalze (50) an der Stift-Spitze (12) der Rohlinge (10') größer ausgebildet wird,
und **dass** am Schienenende bereits entgratete Stift-Endprodukte (10) in den Behälter (70) gelangen.

2. Verfahren nach Anspruch 1, **dadurch gekennzeichnet, dass** die weitere Walze eine Bürstenwalze (60) oder eine zusätzliche Schleifwalze ist.

3. Vorrichtung zur Durchführung des Verfahrens nach Anspruch 1 oder 2, **dadurch gekennzeichnet, dass** die beiden Abschnitte (59, 69) der Transportschiene (40) zueinander höhenversetzt angeordnet sind und von den Stiften (10', 10", 10) jeweils gegensinnig durchlaufen werden.

4. Vorrichtung nach Anspruch 3, **dadurch gekennzeichnet, dass** die Bürstenwalze (60) Kunststoffschleifborsten aufweist, in welche Schleifpartikel, wie Siliciumcarbid, integriert sind.

5. Vorrichtung nach Anspruch 3 oder 4, **dadurch gekennzeichnet, dass** - bei im Wesentlichen übereinstimmenden Walzendurchmesser - die Rotationsachse (61) der weiteren Walze (60) in einem kleineren horizontalen Abstand (64) zur vertikalen Stiftachse (17) angeordnet ist als die Rotationsachse (51) der die Stift-Spitzen (12) erzeugenden Schleifwalze (50).

6. Vorrichtung nach einem der Ansprüche 3 bis 5, **dadurch gekennzeichnet, dass** - bei im Wesentlichen übereinstimmenden Walzendurchmesser - die Rotationsachse (61) der entgratungswirksamen weiteren Walze (60) gegenüber dem unteren Stiftende (13) der in der Transportschiene (40) geführten Stiftreihe in einer größeren vertikalen Entfernung (63) als die Rotationsachse (51) der die Stift-Spitzen (12) erzeugenden Schleifwalze (50) angeordnet ist.

7. Vorrichtung nach einem der Ansprüche 3 bis 6, **dadurch gekennzeichnet, dass** sowohl der Schleifwalze (50) als auch der weiteren Walze (60) jeweils ein der Stift-Reihe gegenüberliegender Transferriegel (44) angeordnet ist, der im Wechsel in zwei Phasen (45, 46; 45', 46') bewegt wird, nämlich in einer ersten Phase quer (45) gegen die Walzen (50, 60) hin und dann längs (46) in Transportrichtung (49) der Stifte (10', 10"), wo die Stiftenden (13) gegen die Walzen (50, 60) gepresst, transportiert (49) und gedreht (47) werden,
und in einer zweiten Phase quer (45) von den Walzen (50, 60) weg und dann längs (46') in Transport-Gegenrichtung der Stift (10', 10"), wo die Stifte freigegeben sind.

8. Vorrichtung nach einem der Ansprüche 3-bis 7, **dadurch gekennzeichnet, dass** die Schleifwalze (50) und die weitere Walze (60) durch einen gemeinsamen Antrieb rotationsbwegt (57, 67) werden.

9. Vorrichtung nach einem der Ansprüche 3 bis 8, **dadurch gekennzeichnet, dass** die den beiden Walzen (50, 60) zugeordneten Transferriegel (44) zwar eigenständig, aber von einem gleichen Antrieb schrittbewegt (45, 46, 45', 46') werden.

## Claims

1. Method for producing pins, such as battery terminals (10), used as anode discharger in electrical batteries (30),
in that a wire (18) is first fed continuously to a cutting tool (27) and there cut into wire sections (19) of a defined length,
the wire sections (19) are then fed one after the other to an upsetting tool (35), where one end (38) of the section is in each case formed into a pin head (11) and a pin blank (10') is thus produced,
the pin blanks (10') are then passed to transport rail (40), where with their pin heads (11) supported in a longitudinal slot (41) in the rail they are conveyed freely suspended (49),
the pin blanks (10') guided in the transport rail (40) are then, with the lower end (13) away from the pin head (11), passed along a grinding roller (50) and thus rotated (47) about their pin axes (17),
whereby a pin point (12), still having burrs (58) to be removed, is produced on the pin blank (10'),
and finally the pointed pins in the transport (40) rail are brought to a container (70)
where they drop out of the longitudinal slot (41) and are collected for further processing,
**characterised in that**
a number of the freely suspended pins (10', 10'', 10) are carried on at least two successive sections (59, 69) of the transport rail (40) and there simultaneously machined in groups,
in the first rail section (59) the pin blanks (10') pass along the grinding roller (50) and pass on to the second rail section (69) as intermediate products (10'') provided with the pin point (12),
the pin intermediate products (10'') are moved along a further roller (60) in the second rail section (69) and there the burrs (58) are removed from the pin points (12),
whereby the contact angle (66) of the deburring roller (60) relative to the pin point (12) of the intermediate product (10'') is larger compared with the corresponding contact angle (56) of the grinding roller (50) at the pin point (12) of the blank (10'),
and at the end of the rail pin end-products (10) already deburred pass into the container (70).

2. Method in accordance with claim 1, **characterised in that** the further roller is a brush roller (60) or an additional grinding roller.

3. Device for performing the method according to claim 1 or 2, **characterised in that** both sections (59, 69) of the transport rail (40) are vertically offset relative to each other and the pins (10', 10'', 10) pass through them in turn.

4. Device in accordance with claim 3, **characterised in that** the brush roller (60) has plastic bristles into which abrasive particles, such as silicon carbide, are integrated.

5. Device in accordance with claim 3 or 4, **characterised in that**, with the roller diameters being essentially the same, the axis of rotation (61) of the further roller (60) is arranged at a smaller horizontal distance (64) from the vertical axis (17) than the axis of rotation (51) of the grinding roller (50) producing the pin points (12).

6. Device in accordance with one of claims 3 to 5, **characterised in that**, with the roller diameters being essentially the same, the axis of rotation (61) of the further deburring roller (60) is arranged at a greater vertical distance (63) relative to the lower pin end (13) of the row of pins carried in the transport rail (40) than the axis of rotation (51) of the grinding roller (50) producing the pin ends (51).

7. Device in accordance with one of claims 3 to 6, **characterised in that** both the grinding roller (50) and the further grinding roller (60) are each arranged in a transfer rail (44) that is moved in two phases (45, 46; 45', 46') in turn, i.e. transversely against rollers (50,60) in the first phase (45) and then longitudinally (46) in the conveying device (49) of pins (10', 10''), where the pin ends (13) are pressed against the rollers (50, 60), transported (49) and rotated (47),
and in a second phase transversely (45) away from the rollers (50, 60) and then longitudinally (46') in the opposite direction to the transport of the pin (10', 10''), where the pins are released.

8. Device in accordance with one of claims 3 to 7, **characterised in that** the grinding roller (50) and the further roller (60) are rotated (57,67) by a common drive.

9. Device in accordance with one of claims 3 to 8, **characterised in that** the transfer rails (44) allocated to both rollers (50,60), although independent, are moved in steps (45, 46, 45', 46') by the same drive.

## Revendications

1. Procédé pour la fabrication de broches, notamment de broches (10) de piles, lesdites broches servant de dérivation anodique dans les piles électriques (30),
dans lequel dans un premier temps on introduit continuellement un fil (18) dans un outil de coupe (27), fil que l'on coupe dans ledit outil en segments (19) d'une longueur définie,
dans lequel après cela on amène les segments de fil (19) les uns après les autres à un outil de refoulement (35) qui équipe une extrémité (38) du segment avec une tête (11), créant ainsi une broche brute (10'),
dans lequel ensuite ces broches brutes (10') parviennent dans un rail transporteur (40) où elles s'appuient, au moyen de leurs têtes (11), dans une rainure longitudinale (41) du rail et continuent d'avancer guidées (49) en suspension libre,
dans lequel après cela les broches brutes (10') guidées dans le rail transporteur (40) sont guidées, par leur extrémité inférieure (13) opposée à la tête de broche (11), le long d'un rouleau de ponçage (50), et décrivent ce faisant une rotation (47) autour de leur axe (17),
ce qui crée une pointe (12) de broche présentant des bavures (58) qu'il reste à enlever de la broche brute (10'),
et dans lequel enfin les pointes ainsi rendues coniques et présentes dans le rail transporteur (40) sont amenées à un conteneur (70) où elles tombent de la fente longitudinale (41) ménagée dans le rail et se rassemblent en vue de la poursuite de leur transformation,
**caractérisé en ce que**
un grand nombre de broches en suspension libre (10', 10'', 10) sont guidées dans au moins deux tronçons juxtaposés (59, 69) du rail transporteur (40), et qu'elles y sont usinées simultanément par groupe,
dans le premier tronçon (59) du rail les broches brutes (10') circulent le long du rouleau de ponçage (50) et qu'elles parviennent dans le second tronçon du rail (69) sous forme de broches intermédiaires (10'') équipées de la pointe conique (12),
les broches intermédiaires (10'') situées dans le second tronçon, de rail (69) circulent le long d'un autre rouleau (60) qui se charge d'enlever les bavures (58) situées contre les pointes (12) des broches,
sachant que l'angle de contact (66) entre le rouleau (60) effectuant l'ébavurage et la pointe (12) de la broche intermédiaire (10'') est plus grand que l'angle de contact correspondant (56) entre le rouleau de ponçage (50) et la pointe (12) des broches brutes (10'),
et **en ce qu'**à l'extrémité du rail des broches finies (10), déjà ébavurées, parviennent dans le conteneur (70).

2. Procédé selon la revendication 1, **caractérisé en ce que** le rouleau suivant est un rouleau brosse (60) ou un rouleau de ponçage supplémentaire.

3. Dispositif de réalisation du procédé selon la revendication 1 ou 2, **caractérisé en ce que** les deux tronçons (59, 69) du rail transporteur (40) sont agencés réciproquement décalés en hauteur et que les broches (10', 10'', 10) les traversent chacun en sens inverse.

4. Dispositif selon la revendication 3, **caractérisé en ce que** le rouleau brosse (60) présente des crins de ponçage en matière plastique dans lesquels sont intégrés des particules de ponçage telles que du carbure de silicium.

5. Dispositif selon la revendication 3 ou 4, **caractérisé en ce qu'**en présence de diamètres de rouleaux concordants pour l'essentiel, l'axe de rotation (61) du rouleau suivant (60) présente un écart horizontal (64), par rapport à l'axe vertical (17) de la broche, inférieur à l'axe de rotation (51) du rouleau de ponçage (50) générant les pointes (12) des broches.

6. Dispositif selon l'une des revendications 3 à 5, **caractérisé en ce qu'**en présence de diamètres de rouleaux concordants pour l'essentiel, l'axe de rotation (61) du rouleau suivant (60) exerçant la rotation se trouve à une plus grande distance verticale (63), par rapport à l'extrémité inférieure (13) de la rangée de broches guidées dans le rail de transport (40), que l'axe de rotation (51) du rouleau de ponçage (50) générant les pointes (12) des broches.

7. Dispositif selon l'une des revendications 3 à 6, **caractérisé en ce que** tant pour le rouleau de ponçage (50) que pour le rouleau de ponçage suivant (60) a été agencée une barre de transfert (44) située en face de la rangée de broches, ladite barre se déplaçant en alternance en deux phases (45, 46 ; 45', 46'), à savoir dans une première phase: transversalement (45) en direction des rouleaux (50, 60) et ensuite longitudinalement (46) dans le sens de transport (49) des broches (10', 10''), point où les extrémités des broches (13) sont pressées contre les rouleaux (50, 60), transportées (49) puis tournées (47),
et dans une seconde phase: transversalement (45) en s'éloignant des rouleaux (50, 60) et ensuite longitudinalement (46') dans le sens opposé à celui du transport des broches (10', 10''), point où a lieu la libération des broches.

8. Dispositif selon l'une des revendications 3 à 7, **caractérisé en ce qu'**un mécanisme conjoint fait entrer en rotation (57, 67) le rouleau de ponçage (50) et le rouleau suivant (60).

9. Dispositif selon l'une des revendications 3 à 8, **caractérisé en ce que** les barres de transfert (44) affectées aux deux rouleaux (50, 60) se déplacent certes indépendantes, mais pas à pas (45, 46, 45', 46'), commandées par un mécanisme d'entraînement identique.
